# EUROPEAN PATENT SPECIFICATION

(11) **EP 3 475 635 B1**
(45) Date of publication and mention of the grant of the patent: **22.10.2025**
(21) Application number: 17758842.3
(22) Date of filing: 21.08.2017
(51) Int. Cl.: F25D 23/10, F25D 23/12, F25D 29/00, F25D 31/00, H01H 3/08

(54) **REFRIGERATING DEVICE FOR A RECREATIONAL VEHICLE**
KÜHLVORRICHTUNG FÜR EIN FREIZEITFAHRZEUG
DISPOSITIF DE RÉFRIGÉRATION POUR UN VÉHICULE DE LOISIR

(30) Priority: 26.08.2016 DE 102016216126
(43) Date of publication of application: 01.05.2019
(73) Proprietor: Dometic Sweden AB, 171 54 Solna (SE)
(72) Inventor: REMMEL, Marcus, 57539 Roth (DE); PETER, Jörg, 58540 Meinerzhagen (DE); STEIGER, Michael, 57482 Wenden (DE)
(74) Representative: Grosse, Felix Christopher
(86) International application number: PCT/EP2017/071052
(87) International publication number: WO 2018/036975

(56) References cited:
- EP-A1- 2 562 499
- EP-A2- 2 765 488
- WO-A1-2016/026741
- CN-U- 202 361 741
- DE-A1- 10 307 756
- KR-A- 20150 008 763
- KR-B1- 100 756 464
- KR-B1- 100 880 487
- US-B1- 6 799 434

## Description

The present invention relates to a refrigerating device for a recreational vehicle and in particular to a refrigerator for a recreational vehicle.

A recreational vehicle in the sense of the invention may be a caravan, a mobile home, a yacht or any other vehicle being equipable with a refrigerating device. Such refrigerating devices comprise a refrigerating chamber that is defined by side walls, an upper and a lower wall and a front opening. Such refrigerating devices further comprise a door, which is configured to allow sealing of the front opening and to allow accessing the refrigerating chamber via the front opening, an input panel comprising a display, an input knob and a processing unit.

Recreational vehicles in general have limited space available for built-in components like refrigerating devices. Furthermore, refrigerating devices for recreational vehicles may require a much increased user interaction compared to refrigerating devices for stationary applications. More specifically, mobile refrigerating devices may have the option of selecting a specific source of power, adjusting the refrigerating temperature in order to maintain energy efficiency and also turning the mobile refrigerating device on and off again, which is most likely occurring more frequently compared to stationary applications of refrigerating devices.

Prior art is known from the document KR 2015 0008763 A. This document relates to a refrigerator and a method to manufacture the same. The refrigerator comprises: an operation knob equipped in a door to operate by being rotated in order to select the operation of the refrigerator; and a display equipped on one side of the operation knob to display operation information of the selected refrigerator. Therefore, the present invention has an effect of easily selecting the operation of the refrigerator and intuitively displaying the operational state. Other prior art is known from WO 2016/026741 A1.

In view of the prior art, it is generally desired to provide a user-friendly interface for a convenient operation of the refrigerating device. The object of this invention is therefore to provide all relevant inputs for controlling the refrigerating device in a convenient and small in dimension set-up which is user-friendly and easy to use and operate.

The object is achieved by means of a refrigerating device with the features of claim 1. Favorable developments are provided in the dependent claims.

One embodiment of the refrigerating device for a recreational vehicle comprises a refrigerating chamber which is defined by side walls, an upper and a lower wall and a front opening. The refrigerating device further comprises a door which is configured to allow sealing of the front opening and to allow accessing the refrigerating chamber via the front opening, an input panel comprising a display, an input knob and a processing unit, wherein the display is configured to depict a plurality of items which correspond to a plurality of executable input methods to be triggered by a user via actuation of the input knob. The processing unit operatively connects the display unit display knob such that triggering an input method is achieved by rotating the input knob to select at least one of the depicted items corresponding to the desired input method and by pressing the input knob to execute the desired input method corresponding to the selected depicted item.

Here, triggering an input method requires two inputs, namely a) selecting of an item by means of rotating the knob and b) execution of the input method that corresponds to the selected item by pressing the input knob. This approach provides an easy to use, easy to understand and failure-safe triggering of a desired input method. The input know therefore has two degrees of freedom, namely rotation about its access of rotation and lateral movement along its access of rotation. Naturally, further degrees of freedom might be introduced for selecting and/or executing input methods, for example tilting the knob about its access of rotation or laterally shifting the knob in parallel to its access of rotation. Furthermore, pressing the input knob may optionally also open a sub-menu which is depicted on the display after pressing the input knob. In general, rotating the input knob corresponds to swiping through menu items and pressing the knob corresponds to confirming or activating the currently selected item.

The refrigerating device according to the present invention thus has a panel that allows triggering all relevant commands for operating the refrigerator via an input knob and by means of selecting depicted items on a display. Processing user inputs via the input knob as well as computing the display is achieved by a processing unit. The terms "executable input method" relates to a predetermined algorithm or computational method for controlling an arbitrary component of the refrigerating device.

In a preferred embodiment, each item of the plurality of items depicted on the display corresponds to a specific executable input method selected from the list, including setting a refrigerating temperature, preparing crushed ice or ice cubes, setting the source of energy, defrosting the refrigerating chamber, setting an alarm, controlling ventilation of the refrigerating chamber and adjusting the volume or light. Obviously, the list of specific executable input methods as provided before is not restricted thereto and may include any other executable input method useful for operating a refrigerating device. Preferably, the item depicted on the display which corresponds to a specific executable input method is depicted in a manner that allows anticipation of the intended functionality by intuition. In view of the above, the user may quickly identify the desired executable input method and trigger the same via actuation of the input knob.

In a preferred embodiment, the input panel is fixedly mounted to the housing of the refrigerating device. By means of such a fixed arrangement, damages of the input panel, caused for example by accidental slamming of the door against objects inside the recreational vehicle, is substantially reduced. Preferably, the input panel is integrated into the body of the refrigerating device such that it is integrated smoothly and substantially without gaps between the input panel and the refrigerating device.

In a preferred embodiment, the refrigerating device comprises a first refrigerating chamber and a second refrigerating chamber, whereas the first refrigerating chamber is a freezer and the second refrigerating chamber is a refrigerator. Controlling the later combination of refrigerating chambers may be achieved either by controlling both chambers via one control panel or by controlling each chamber via an individual control panel. Alternatively, the refrigerating device may comprise a different further refrigerating chamber which is accommodated on the inside of the refrigerating device. The term "refrigerating chamber" however is not limited thereto. According to the invention, it is also possible to provide a chamber in addition to or as substitution for an already present refrigerating chamber. For instance, a combination of a refrigerating chamber with a cabinet, a microwave, an oven or the like into the refrigerating device is also possible to be controlled via the input panel. Accordingly thereto, a preferred embodiment constitutes a combination of a refrigerating chamber with an oven. The refrigerating device of the present invention, thus, preferably comprises a further chamber, whereas the further chamber is an oven. The oven is also connected with and to be controlled via the input panel. With this preferred configuration, the present invention provides a one compact device for heating and cooling which is centrally controllable by one input panel. The plurality of items depicted by the display, thus, further correspond to a plurality of executable input methods for the oven to be triggered by a user via actuation of the input knob.

Preferably, the specific executable input methods concerning the oven include one or more methods selected from the list consisting of turning gas on and off, setting a heating temperature, setting a heating mode like, for example, top heat, bottom heat, circulating air, rotisserie grill and combinations thereof, various time settings like, for example, a starting time and a duration for the heating, setting an alarm, controlling ventilation of the oven chamber, setting light settings and adjusting the volume.

Preferably, the oven is the top chamber of the refrigerating device of the present invention. This is advantageous since air warmed from the oven rises to the top which would adversely affect the refrigerating chamber if it would be the other way round.

Preferably, the input panel placed above and/or below a door of a refrigerating chamber of a refrigerating device, such that the panel is substantially at the same height as an upper and/or a lower wall of a refrigerating chamber of the refrigerating device. Thus, said spaces above or below a door of a refrigerating chamber may effectively be consumed by the panel according to the invention. Advantageously, formerly dead space is now effectively used, thus the overall dimensions of the refrigerating device may be reduced. In a preferred embodiment, the control panel is placed such that it is directly adjacent to a horizontal door of the refrigerating device.

Preferably, the door of the refrigerating device is hinged at a left and/or right side of the refrigerating chamber and comprises at least one handle to access the refrigerating chamber. In a preferred embodiment, the handle is a vertical notch, protruding into the inside of the door of the refrigerating device. Preferably, the door of the refrigerating device may be open both to the left side and to the right side by means of suitable left and right hinge and locking mechanisms.

Preferably, the panel constitutes an integral part of the refrigerating device. In the sense of the invention, the input panel of the refrigerating device incorporates further functionalities, such as providing parts of the housing structure, providing a supporting structure or constituting a part of the frame of the refrigerating device. It is advantageous, to integrate the input panel such that it is easily to be connected with the devices to be controlled via the input panel.

Preferably, the input panel forms a substantially even surface and the input knob is the only protruding component on the input panel. In the sense of the invention, the presence of gaps, protrusions or recesses shall be reduced to a minimum, in order to reduce the chance of dirt, dust or food remains accumulating on the input panel. By doing so, cleaning of the outside surfaces of the refrigerating device may easily be achieved. Also, during times without constantly maintained cleaning procedures, for example during times when the recreational vehicle is not used, accumulation or growth of potentially harmful substances or biologic material on the input panel is minimized. Therefore, no other protrusion except for the protruding input knob shall be present. Preferably, the display of the input panel is covered by a transparent section of an input panel cover, in order to achieve an even surface with respect to the input panel and the adjacent components of the refrigerating device.

Preferably, the input knob is the only controlling device on the input panel. In the sense of the invention, the user inputs for controlling the refrigerating device shall only be provided via the input knob, in order to reduce the complexity of production, assembly and maintenance of the input panel. Also, the user interaction is much more intuitive, hence fail safe, if only one input knob is present.

The invention will now be described in more detail with reference to the figures showing a preferable embodiment, wherein:
- Fig. 1: is a prospective view of the refrigerating device according to a first embodiment of the invention comprising a first refrigerating chamber and a second refrigerating chamber;
- Fig. 2: is a prospective view of an isolated input panel according to the invention;
- Fig. 3: is a front view of an isolated input panel according to the invention;
- Fig. 4: is section of a refrigerating device according to a first embodiment of the invention in a front view showing the input panel;
- Fig. 5: is an exploded view of the input panel according to the invention;
- Fig. 6: is a prospective sectional view of a refrigerating device according to a first embodiment of the invention; and
- Fig. 7: is a front view showing several embodiments of a refrigerating device 1 for a recreational vehicle.

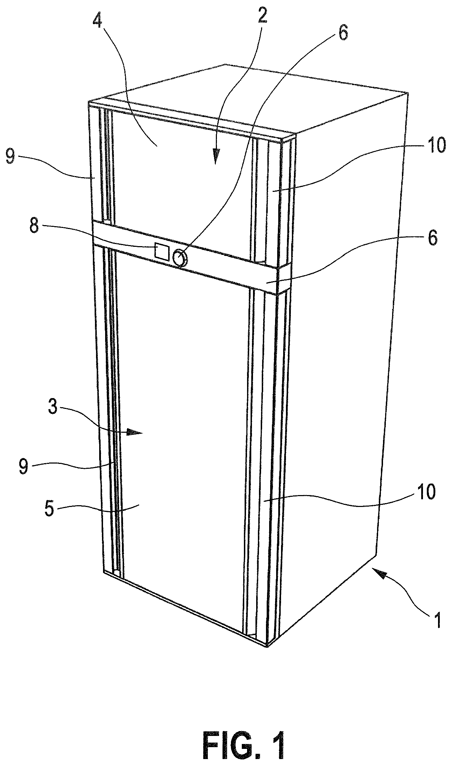

In this particular embodiment of Fig. 1 the refrigerating device 1 comprises a first refrigerating chamber 2, e.g. a freezing compartment, and a second refrigerating chamber 3, e.g. a cooling compartment. Accordingly, the first refrigerating chamber has a first door 4 and a second refrigerating chamber 3 has a second door 5. In between the first door 4 and the second door 5 on the front side of the refrigerating device 1 is provided an input panel 6 with an input knob 7 and a display 8. Each of the first door 4 and the second door 5 comprises a left handle 9 and a right handle 10 for individually and selectively opening the first door 4 and/ or the second door 5 to either the left or the right side. Thereby, the input panel 6 remains stationary attached to the refrigerating device 1. The input panel is further shaped such that it follows the encompassing surface of the refrigerating device without forming protrusions or recesses. The input panel 6 is further provided in a height that corresponds with the lower wall of the first refrigerating chamber 2 and the upper wall of the second refrigerating chamber 3 in order to make use of the dead space in between the first refrigerating chamber 2 and the second refrigerating chamber 3.

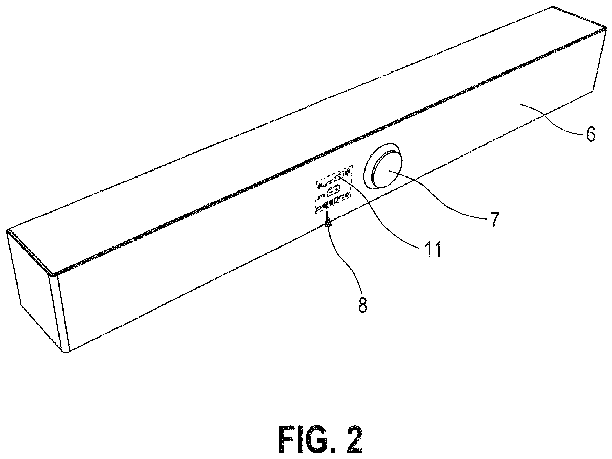

In Fig. 2, the input panel is shown in more detail. It is shown that the input knob has a circular shape and is provided on the right side next to a rectangular display 8 showing a plurality of items 11 which correspond to specific executable input methods and operating modes that may be selected by rotating the input knob 7 and which may be executed by pressing the input knob 7 when the desired item 11 is selected.

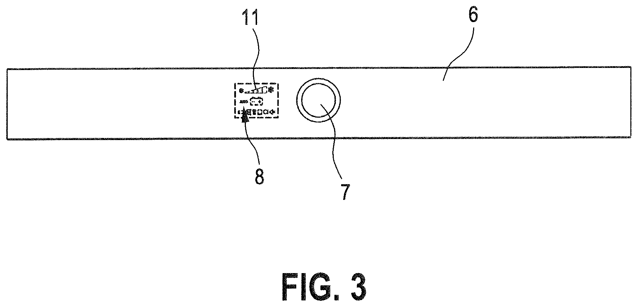

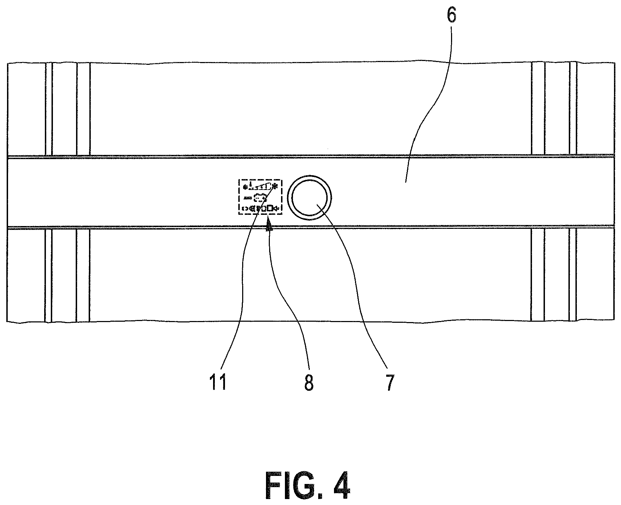

Fig. 3 shows a front view of the isolated input panel 6 and Fig. 4 the input panel 6 as shown in Fig. 3 in combination with the refrigerating device 1. Here it is shown a plurality of items 11 consisting of symbols representing temperature, battery, power source, defrosting, volume control, ventilation and the like.

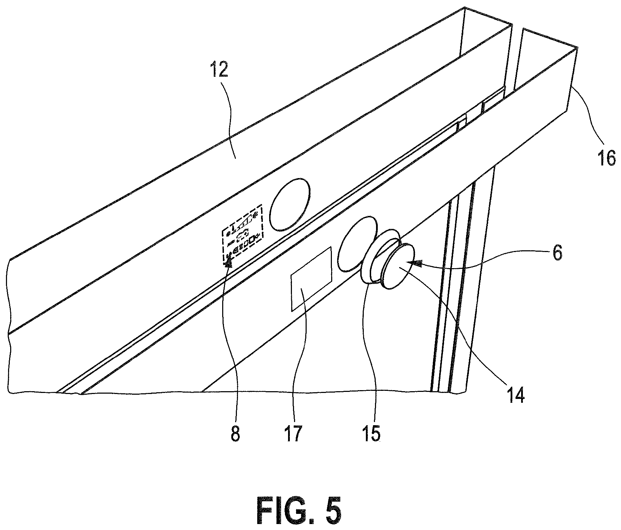

The individual components of the input panel 6 are further shown in Fig. 5. The input panel 6 mainly consists of an input panel core 12, housing the processing unit (not shown), and the display 8, the input knob 6, consisting of a circumferential plate 14 and a ring 15 as well as a cover panel 16. The ring 15 is placed in between the cover panel 16 and the circumferential plate 14. The input panel 16 further comprises a transparent section 17 which aligns with the display 8 that is provided in the input panel core 12 in position and dimension. Thus, the display 8 may conveniently be observed in a mounted condition of the input panel 6, whilst being protected through the cover panel 16.

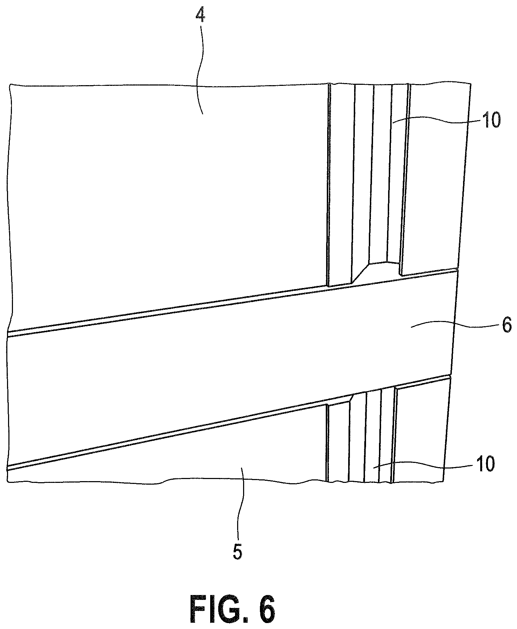

Fig. 6 shows a prospective sectional view of a refrigerating device 1 according to a first embodiment of the invention. It can be seen that the input panel 6 is located adjacent to the first door 4 of the first refrigerating chamber 2 and the second door 5 of the second refrigerating chamber 3. Furthermore, each of the first door 4 of the first refrigerating chamber 2 and the second door 5 of the second refrigerating chamber 3 have vertical right handles 9, 10 to open the doors 4, 5 individually and selectively either to the right side or to the left side.

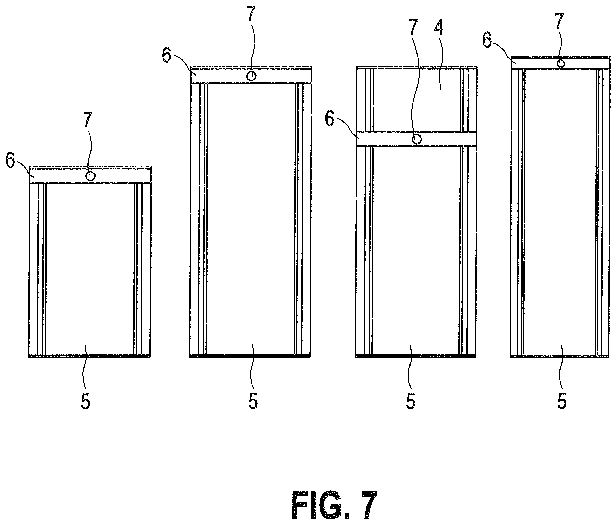

Fig. 7 depicts a variety of further embodiments of a refrigerating device 1 according to the invention. Accordingly, the refrigerating device 1 may either have only one refrigerating chamber, or a first refrigerating chamber 2 and a second refrigerating chamber 3. In either embodiment, the input panel 6 is fixedly provided on the front of the refrigerating device 1 above and/or below a door of the refrigerating chamber of the refrigerating device. The latter is specifically useful, since normally, this dead space would be covered by the doors or an additional blind. Here, the usually unused space is turned into a conveniently reachable space for housing the input panel 6.

## Claims

1. Refrigerating device (1) for a recreational vehicle, comprising a refrigerating chamber (2, 3) which is defined by side walls, an upper wall and a lower wall and a front opening, the refrigerating device (1) further comprising a door (4, 5) which is configured to allow sealing of the front opening and to allow accessing the refrigerating chamber (2, 3) via the front opening, an input panel (6) comprising a display (8), an input knob (6) and a processing unit,
**characterized in that**
the display (8) is configured to depict a plurality of items (11) which correspond to a plurality of executable input methods to be triggered by a user via actuation of the input knob (6), and that the processing unit operatively connects the display (8) with the input knob (6) such that triggering an input method is achieved by rotating the input knob (6) to select at least one of the depicted items (11) corresponding to the desired input method and by pressing the input knob (6) to execute the desired input method corresponding to the selected depicted item.

2. Refrigerating device (1) according to claim 1,
**characterized in that**
each item of the plurality of items (11) depicted on the display (8) corresponds to a specific executable input method selected from the list, including preferably one of or a plurality of setting a refrigeration temperature, preparing crushed ice or ice cubes, setting the source of energy, defrosting the refrigerating chamber, setting an alarm, controlling ventilation of the refrigerating chamber, setting light settings or adjusting the volume.

3. Refrigerating device (1) according to claim 1 or claim 2,
**characterized in that**
the input panel (6) is fixedly mounted to a housing of the refrigerating device (1).

4. Refrigerating device (1) according to any of the preceding claims,
**characterized in that**
the refrigerating device (1) comprises a first refrigerating chamber (2) and a second refrigerating chamber (3), whereas the first refrigerating chamber (2) is a freezer and the second refrigerating chamber (3) is a refrigerator.

5. Refrigerating device (1) according to any of the preceding claims,
**characterized in that**
the refrigerating device (1) comprises a further chamber, whereas the further chamber is an oven.

6. Refrigerating device (1) according to claim 5,
**characterized in that**
each item of the plurality of items (11) depicted on the display (8) corresponds to a specific executable input method, whereas the specific executable input methods for specifically controlling the oven include one or more methods selected from the list consisting of turning gas on and off, setting a heating temperature, setting a heating mode like, for example, top heat, bottom heat, circulating air, rotisserie grill or combinations thereof, various time settings like, for example, a starting time and a duration for the heating, setting an alarm, controlling ventilation of the oven chamber, setting light settings and adjusting the volume.

7. Refrigerating device (1) according to claim 5 or claim 6,
**characterized in that**
the oven is the top chamber of the refrigerating device (1).

8. Refrigerating device (1) according to any of the preceding claims,
**characterized in that**
the input panel (6) is placed above and/or below a door (4, 5) of a refrigerating chamber (2, 3) of a refrigerating device (1), such that the panel (6) is substantially at the same height as an upper and/or lower wall of a refrigerating chamber (2, 3) of the refrigerating device (1).

9. Refrigerating device (1) according to any of the preceding claims,
**characterized in that**
the door (4, 5) of the refrigerating device (1) is hinged at a left and/or right side of the refrigerating chamber (2, 3) and comprises at least one handle (9, 10) to access the refrigerating chamber (2, 3).

10. Refrigerating device (1) according to any of the preceding claims,
**characterized in that**
the input panel (6) further comprises a cover panel (16) with a transparent section (17).

11. Refrigerating device (1) according to any of the preceding claims,
**characterized in that**
the input panel (6) constitutes an integral part of the refrigerating device (1).

12. Refrigerating device (1) according to any of the preceding claims,
**characterized in that**
the input panel (6) forms a substantially even surface and the input knob (7) is the only protruding component on the input panel (6).

13. Refrigerating device (1) according to any of the preceding claims,
**characterized in that**
the input knob (7) is the only controlling device on the input panel (1).

## Patentansprüche

1. Kühleinrichtung (1) für ein Freizeitfahrzeug, die eine Kühlkammer (2, 3) aufweist, die von Seitenwänden, einer oberen Wand und einer unteren Wand und einer vorderen Öffnung definiert wird, wobei die Kühleinrichtung (1) ferner eine Tür (4, 5), die so ausgebildet ist, dass sie das Abdichten der vorderen Öffnung ermöglicht und den Zugang zu der Kühlkammer (2, 3) mittels der vorderen Öffnung ermöglicht, und ein Eingabefeld (6) aufweist, das eine Anzeige (8), einen Eingabeknopf (7) und eine Verarbeitungseinheit aufweist,
**dadurch gekennzeichnet, dass**
die Anzeige (8) dazu ausgebildet ist, mehrere Menüpunkte (11) darzustellen, die mehreren ausführbaren Eingabeverfahren entsprechen, die von einem Nutzer mittels Betätigung des Eingabeknopfes (7) ausgelöst werden können, und dass
die Verarbeitungseinheit operativ die Anzeige (8) mit dem Eingabeknopf (7) derart verbindet, dass das Auslösen eines Eingabeverfahrens durch Drehen des Eingabeknopfes (7) zur Auswahl mindestens eines der dargestellten Menüpunkte (11) entsprechend dem gewünschten Eingabeverfahren und durch Drücken des Eingabeknopfes (7) zum Ausführen des gewünschten Eingabeverfahrens entsprechend dem ausgewählten dargestellten Menüpunkt erreicht wird.

2. Kühleinrichtung (1) gemäß Anspruch 1,
**dadurch gekennzeichnet, dass**
jeder Menüpunkt der mehreren Menüpunkte (11), die auf der Anzeige (8) dargestellt werden, einem speziellen ausführbaren Eingabeverfahren entspricht, das aus der Liste ausgewählt ist, die vorzugsweise eines oder mehrere von Einstellen einer Kühltemperatur, Herstellen von gestoßenem Eis oder Eiswürfeln, Einstellen der Energiequelle, Abtauen der Kühlkammer, Einstellen eines Alarms, Steuern der Belüftung der Kühlkammer, Einstellen von Lichteinstellungen oder Anpassen des Volumens umfasst.

3. Kühleinrichtung (1) gemäß Anspruch 1 oder Anspruch 2,
**dadurch gekennzeichnet, dass**
das Eingabefeld (6) fest am Gehäuse der Kühleinrichtung (1) befestigt ist.

4. Kühleinrichtung (1) gemäß einem der vorstehenden Ansprüche,
**dadurch gekennzeichnet, dass**
die Kühleinrichtung (1) eine erste Kühlkammer (2) und eine zweite Kühlkammer (3) aufweist, wobei die erste Kühlkammer (2) ein Gefrierfach ist und die zweite Kühlkammer (3) ein Kühlraum ist.

5. Kühleinrichtung (1) gemäß einem der vorstehenden Ansprüche,
**dadurch gekennzeichnet, dass**
die Kühleinrichtung (1) eine weitere Kammer aufweist, wobei die weitere Kammer ein Ofen ist.

6. Kühleinrichtung (1) gemäß Anspruch 5,
**dadurch gekennzeichnet, dass**
jeder Menüpunkt der mehreren Menüpunkte (11), die auf der Anzeige (8) dargestellt werden, einem speziellen ausführbaren Eingabeverfahren entspricht, wobei die speziellen ausführbaren Eingabeverfahren zur spezifischen Steuerung des Ofens eine oder mehrere Verfahren beinhalten, die aus der Liste ausgewählt werden, bestehend aus dem Ein- und Ausschalten des Gases, dem Einstellen einer Heiztemperatur, dem Einstellen eines Heizmodus wie zum Beispiel Oberhitze, Unterhitze, Umluft, Rotisserie-Grill oder Kombinationen davon, verschiedenen Zeit-Einstellungen wie zum Beispiel einer Startzeit und einer Dauer für das Heizen, dem Einstellen eines Alarms, dem Steuern der Belüftung der Ofenkammer, dem Einstellen von Lichteinstellungen und dem Einstellen des Volumens.

7. Kühleinrichtung (1) gemäß Anspruch 5,
**dadurch gekennzeichnet, dass**
der Ofen die obere Kammer der Kühleinrichtung (1) ist.

8. Kühleinrichtung (1) gemäß einem der vorstehenden Ansprüche,
**dadurch gekennzeichnet, dass**
das Eingabefeld (6) oberhalb und/oder unterhalb der Tür (4, 5) der Kühlkammer (2, 3) der Kühlvorrichtung (1) angeordnet ist, sodass sich das Eingabefeld (6) im Wesentlichen auf derselben Höhe wie ein obere und/oder eine untere Wand der Kühlkammer (2, 3) der Kühlvorrichtung (1) befindet.

9. Kühleinrichtung (1) gemäß einem der vorstehenden Ansprüche,
**dadurch gekennzeichnet, dass**
die Tür (4, 5) der Kühleinrichtung (1) an der linken und/oder rechten Seite der Kühlkammer (2, 3) eingehängt ist und mindestens einen Griff (9, 10) für den Zugang zur Kühlkammer (2, 3) aufweist.

10. Kühleinrichtung (1) gemäß einem der vorstehenden Ansprüche,
**dadurch gekennzeichnet, dass**
das Eingabefeld (6) ferner eine Abdeckplatte (16) mit einem transparenten Abschnitt (17) aufweist.

11. Kühleinrichtung (1) gemäß einem der vorstehenden Ansprüche,
**dadurch gekennzeichnet, dass**
das Feld (6) einen integralen Teil der Kühleinrichtung (1) bildet.

12. Kühleinrichtung (1) gemäß einem der vorstehenden Ansprüche,
**dadurch gekennzeichnet, dass**
das Eingabefeld eine im Wesentlichen ebene Oberfläche bildet und der Eingabeknopf (7) die einzige vorstehende Komponente an dem Eingabefeld (6) ist.

13. Kühleinrichtung (1) gemäß einem der vorstehenden Ansprüche,
**dadurch gekennzeichnet, dass**
der Eingabeknopf (7) die einzige Steuereinrichtung an dem Eingabefeld (6) ist.

## Revendications

1. Dispositif de réfrigération (1) pour un véhicule de loisir, comprenant une chambre de réfrigération (2, 3) qui est définie par des parois latérales, une paroi supérieure et une paroi inférieure et une ouverture avant, ledit dispositif de réfrigération (1) comprenant en outre une porte (4, 5) qui est configurée pour permettre de fermer de façon étanche ladite ouverture avant et pour permettre d'accéder à la chambre de réfrigération (2, 3) par l'ouverture avant, un panneau d'entrée (6) comprenant un affichage (8), un bouton d'entrée (6) et une unité de traitement,
**caractérisé en ce que**
ledit affichage (8) est configuré pour représenter une pluralité d'éléments (11) qui correspondent à une pluralité de procédures d'entrée exécutables à déclencher par un utilisateur moyennant un actionnement du bouton d'entrée (6), et **en ce que** ladite unité de traitement est destinée à connecter de façon opérationnelle ledit affichage (8) au bouton d'entrée (6) de façon qu'un déclenchement d'une procédure d'entrée est réalisé en tournant le bouton d'entrée (6) pour sélectionner au moins un des éléments représentés (11) qui correspond à la procédure d'entrée souhaitée et en poussant le bouton d'entrée (6) pour exécuter la procédure d'entrée souhaitée qui correspond au élément représenté sélectionné.

2. Dispositif de réfrigération (1) selon la revendication 1,
**caractérisé en ce que**
chaque élément de ladite pluralité d'éléments (11) représentés sur ledit affichage (8) correspond à une procédure d'entrée exécutable particulier sélectionnée dans la liste qui comprend de préférence un ou une pluralité des suivants : régler une température de réfrigération, préparer de la glace pilée ou des glaçons, établir la source d'énergie, dégivrer la chambre de réfrigération, régler une alarme, commander la ventilation de la chambre de réfrigération, régler des paramètres d'éclairage, ou ajuster le volume.

3. Dispositif de réfrigération (1) selon la revendication 1 ou 2,
**caractérisé en ce que**
le panneau d'entrée (6) est monté de façon fixe sur un boîtier du dispositif de réfrigération (1).

4. Dispositif de réfrigération (1) selon l'une quelconque des revendications précédentes,
**caractérisé en ce que**
le dispositif de réfrigération (1) comprend une première chambre de réfrigération (2) et une deuxième chambre de réfrigération (3), la première chambre de réfrigération (2) étant un congélateur et la deuxième chambre de réfrigération (3) étant un réfrigérateur.

5. Dispositif de réfrigération (1) selon l'une quelconque des revendications précédentes,
**caractérisé en ce que**
le dispositif de réfrigération (1) comprend une chambre ultérieure, ladite chambre ultérieure étant un four.

6. Dispositif de réfrigération (1) selon la revendication 5,
**caractérisé en ce que**
chaque élément de la pluralité d'éléments (11) représentés sur l'affichage (8) correspond à une procédure d'entrée exécutable particulier, les procédures d'entrée exécutables particuliers pour commander spécifiquement le four comprenant une ou plusieurs procédures sélectionnées dans la liste qui est constituée de : mettre en marche ou arrêter le gaz, régler une température de chauffage, établir un mode de chauffage, tel que, par exemple, à chaleur de voûte, à chaleur de sole, à chaleur tournante, à grille de rôtisserie, ou des combinaisons ceux-ci, régler des temps divers, tel que, par exemple, une heure de début et une durée de chauffage, régler une alarme, commander la ventilation de la chambre de four, régler des paramètres d'éclairage et ajuster le volume.

7. Dispositif de réfrigération (1) selon la revendication 5 ou 6,
**caractérisé en ce que**
le four est la chambre supérieure du dispositif de réfrigération (1).

8. Dispositif de réfrigération (1) selon l'une quelconque des revendications précédentes,
**caractérisé en ce que**
ledit panneau d'entrée (6) est disposé au-dessus ou au-dessous d'une porte (4,5) d'une chambre de réfrigération (2, 3) du dispositif de réfrigération (1) de façon que le panneau (6) est sensiblement au même niveau qu'une paroi supérieure et/ou inférieure d'une chambre de réfrigération (2, 3) du dispositif de réfrigération (1).

9. Dispositif de réfrigération (1) selon l'une quelconque des revendications précédentes,
**caractérisé en ce que**
la porte (4,5) du dispositif de réfrigération (1) est articulée sur le côté gauche et/ou le côté droite de la chambre de réfrigération (2, 3) et comprend au moins une poignée (9, 10) pour accéder à la chambre de réfrigération (2, 3).

10. Dispositif de réfrigération (1) selon l'une quelconque des revendications précédentes,
**caractérisé en ce que**
le panneau d'entrée (6) comprend en outre un panneau de couverture (16) comportant une section transparente (17).

11. Dispositif de réfrigération (1) selon l'une quelconque des revendications précédentes,
**caractérisé en ce que**
le panneau d'entrée (6) constitue une partie intégrale du dispositif de réfrigération (1).

12. Dispositif de réfrigération (1) selon l'une quelconque des revendications précédentes,
**caractérisé en ce que**
le panneau d'entrée (6) forme une surface sensiblement plane et le bouton d'entrée (7) est le seul composant qui est en saillie sur le panneau d'entrée (6).

13. Dispositif de réfrigération (1) selon l'une quelconque des revendications précédentes,
**caractérisé en ce que**
le bouton d'entrée (7) est le seul dispositif de commande sur le panneau d'entrée (1).
